# EUROPÄISCHE PATENTSCHRIFT

(11) **EP 3 797 890 B1**
(45) Veröffentlichungstag und Bekanntmachung des Hinweises auf die Patenterteilung: **27.03.2024**
(21) Anmeldenummer: 19306241.1
(22) Anmeldetag: 30.09.2019
(51) Int. Cl.: B21C 37/08, B23K 26/262

(54) **VERFAHREN ZUR HERSTELLUNG DÜNNWANDIGER HOHLPROFILE KLEINER DURCHMESSER AUS NE-METALLEN**
METHOD FOR THE PRODUCTION OF THIN-WALLED HOLLOW PROFILES WITH SMALL DIAMETERS MADE FROM NON-FERROUS METALS
PROCÉDÉ DE FABRICATION DE PROFILÉS CREUX MINCES ET DE PETIT DIAMÈTRE EN MÉTAL NON-FERREUX

(43) Veröffentlichungstag der Anmeldung: 31.03.2021
(73) Patentinhaber: Nexans, 92400 Courbevoie (FR)
(72) Erfinder: EGERER, Ralf, 30177 HANNOVER (DE); PETERSEN, Olaf, 30177 HANNOVER (DE); DINKEL, Steven, 30625 HANNOVER (DE)
(74) Vertreter: Ipsilon

(56) Entgegenhaltungen:
- EP-A1- 1 121 991
- EP-A1- 1 160 046
- WO-A1-2017/190042

## Beschreibung

### Gebiet

Die Erfindung betrifft die Herstellung von Rohren bzw. Hohlprofilen aus NE-Metallen, insbesondere die kontinuierliche Herstellung von dünnwandigen Rohren mit kleinen Durchmessern.

### Hintergrund

Bei der Herstellung dünnwandiger Hohlprofile oder Rohre mit kleinen Durchmessern in einem kontinuierlichen Prozess wird zunächst ein geschlitztes Hohlprofil mit größeren Abmessungen, bspw. ein Schlitzrohr mit einem größeren Durchmesser, und ggf. einer größeren Wandstärke aus einem flachen Metallband gefertigt, bspw. durch entsprechend angeordnete Rollen. Anschließend werden die an dem Schlitz zusammentreffenden Kanten des zu dem Hohlprofil geformten Metallbands zusammengeschweißt, wobei üblicherweise ein Lichtbogenschweißverfahren zur Anwendung kommt. Das Lichtbogenschweißen erzeugt an der Innenseite des Rohres eine ausgeprägte Schweißwulst, die in das Rohrinnere hineinragt. Nach dem Schweißen muss daher die Schweißnaht an der Außen- und/oder Innenseite noch geglättet oder entgratet werden, oder die Wulst wird spanend entfernt, bevor das Rohr weiterbearbeitet werden kann. Um sicherzustellen, dass die Schweißnaht einheitlich ist, kann eine Reihe zerstörungsfreier Prüfungen durchgeführt werden, z. B. Wirbelstromprüfung, Ultraschallprüfung und Drucktests.

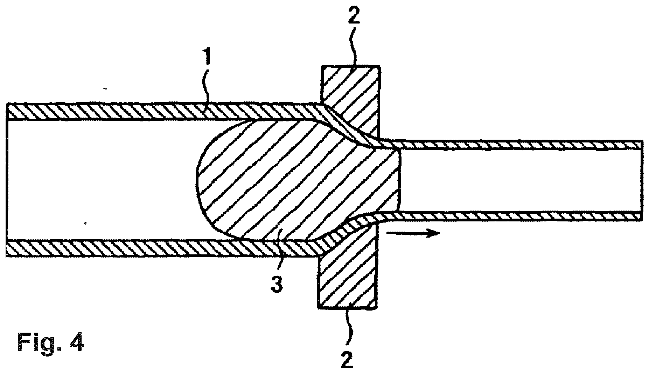

Genau wie bei der Herstellung nahtloser Rohre mit kleinem Durchmesser und/oder kleinen Wanddicken werden die geschweißten Rohre anschließend einem Ziehprozess unterzogen, bei dem mittels eines Dorns, Stopfens oder einer Mandrille die Wandstärke reduziert wird um einen kleineren Durchmesser und ggf. dünnere Wandstärken des Endprodukts zu erreichen. Insbesondere wegen der beim Lichtbogenschweißens großen Abmessungen der Schweißnaht und des daher erforderlichen großen Mindestdurchmessers des geschweißten Rohres sind ggf. mehrere Ziehprozesse mit höherem Umformgrad notwendig um kleine Querschnitte und dünnere Wandstärken zu erzielen. Rohrdurchmesser kleiner als 4 mm können mittels Lichtbogenschweißen nicht mehr sicher hergestellt werden. Wenn in einem ersten Ziehprozess zunächst nur die Wandstärke reduziert wurde muss anschließend der Durchmesser des Rohres verringert werden. Dazu kann das Rohr bspw. über einen fliegenden Stopfen und durch einen Ziehstein gezogen werden. Die Verringerung der Wandstärke und des Durchmessers kann jedoch auch in einem einzigen Ziehvorgang erfolgen. Beim Ziehen über einen Stopfen wird neben einer Verringerung der Wandstärke bzw. des Durchmessers auch die Schweißwulst auf der Innenseite geglättet. Eine weitere Verringerung des Durchmessers auf das gewünschte Endmaß kann in einem oder mehreren anschließenden Ziehprozessen erfolgen, wobei auf den Stopfen verzichtet werden kann, wenn keine weitere Verringerung der Wandstärke gefordert ist. Figur 4 zeigt eine schematische Darstellung der beim Stopfenziehen verwendeten Elemente. Beim Stopfenziehen wird ein Stopfen 3 innen in dem Rohr 1 positioniert, das dann durch eine Öffnung in einer Form 2 mit einem kleineren Durchmesser als der des ursprünglichen Rohres und der des Stopfens gezogen wird. Der Stopfen kann nicht durch das Rohr hindurchgezogen werden und verschiebt sich relativ zu dem Rohr - tatsächlich bleibt er vor der Öffnung stehen, während das Rohr zwischen der Öffnung und dem Stopfen hindurchgezogen wird und dabei sein Durchmesser und seine Wanddicke verringert werden. Dabei kann das Rohr zusätzlich zu der Erwärmung aufgrund der Verformung vorgewärmt werden, um die Duktilität des Materials beim Ziehen zu erhöhen. Im Innern des Rohres kann ein Ziehmittel eingebracht sein das die Reibung des Stopfens reduziert. Der Prozess kann mehrfach mit abnehmenden Durchmessern wiederholt werden. Wenn die Kaltverfestigung des Werkstoffes das gewünschte oder vom Werkstoff erträgliche Maß übersteigt, kann ein Glühschritt eingefügt werden, bei dem vor einem anschließenden Ziehvorgang die gezogenen Rohre entfettet, geglüht und für den nächsten Ziehvorgang entzundert und angespitzt werden. Das Glühen homogenisiert das metallurgische Mikrogefüge des Rohres. Da das Korngefüge eines Rohres nach dem Ziehen gestört ist, es kommt insbesondere zum Aufstauen von Versetzungen, wird das Material hart und spröde, man spricht von Kaltverfestigung oder Verformungsverfestigung. Um die gezogenen Rohre nochmals ziehen zu können müssen die Störungen im Gefüge aufgehoben und die Eigenspannungen abgebaut werden, damit das Material wieder in seinen ursprünglichen Zustand versetzt wird. Beim Glühen werden die gezogenen Rohre einer kontrollierten Temperatur - Materialabhängig bis zu 1200°C - und Glühzeit ausgesetzt. Während dieses Vorgangs behält das Rohr zumindest bei einfachen Querschnitten üblicherweise seine Form, aber die Körner im Mikrogefüge des Rohres bilden wieder ein normales unbelastetes Muster. Je nach Glühtemperatur werden Eigenspannungen und Gefügefehler wie Versetzungen durch Kristallerholung, also Versetzungsbewegung, und Rekristallisation abgebaut. Das geglühte Rohr ist dann weicher und kann weiter gezogen werden. Je nach gewünschter Ziel-Härte ist für Hochdruckrohre eine abschließende Wärmebehandlung nicht erforderlich. Damit bleibt das Material im hartgezogenen Zustand und verbessert so die mechanischen Eigenschaften des Rohres. Sowohl geschweißte Rohre als auch lange nahtlose Rohre können so auf Ringrohrform gezogen werden, und es können sehr lange Ringrohre hergestellt werden.

Für bestimmte Anwendungen sind Rohre aus Nichteisenmetallen (NE-Metallen) besonders geeignet. Kupfer- oder Aluminiumrohre können bspw. wegen der hohen Wärmeleitfähigkeit in Wärmetauschern bevorzugt Anwendung finden. Insbesondere Kupferrohre können auch als elektrische Schirme in Koaxialkabeln oder für Hohlleiter verwendet werden. In Wärmetauschern, aber auch in Koaxialkabeln, werden Rohre mit kleinen Durchmessern und geringen Wandstärken benötigt, zum einen um den Wärmeübergang zwischen den Medien so wenig wie möglich zu behindern und die Wärmekapazität des Rohres selbst klein zu halten, zum anderen um Materialeinsatz und Gewicht gering zu halten. Insbesondere Wandstärken kleiner als 0,15 mm lassen sich mittels Lichtbogenschweißen nicht mehr prozesssicher und mit der erforderlichen Qualität der Schweißnaht herstellen. Rohre aus NE-Metallen mit kleineren als den genannten Wandstärken und Durchmessern müssen demnach zwingend durch sich an die eigentliche Rohrherstellung anschließende Verarbeitungsschritte auf das jeweils gewünschte Endmaß gebracht werden.

Grundsätzlich ist es von Vorteil, wenn einzelne Rohre möglichst als lange Teile herstellbar sind, um einen weitgehend kontinuierlichen Herstellungsprozess zu ermöglichen, der so selten wie möglich unterbrochen werden muss. Aus den langen Rohren können dann ggf. geforderte Teilstücke geschnitten werden, wobei wenn überhaupt nur ein kleiner Schnittrest übrigbleibt. Allgemein ist natürlich jede Einsparung von Prozessschritten bei der Herstellung vorteilhaft.

Aus der EP 1 121 991 A1 ist ein Verfahren zur Herstellung radial geschlossener Hohlprofile, bei dem ein dünnwandiges Metallband mittels paarweise zusammenarbeitenden Formrollen oder Formwalzen allmählich zu einem Schlitzrohr umgeformt wird, welches anschließend entlang des Schlitzes zu einem längsnahtverschweißten Rohr verarbeitet wird. Dabei kann ein Laser zum Verschweißen genutzt werden.

Es ist eine Aufgabe der vorliegenden Erfindung eine Vorrichtung und ein Verfahren vorzuschlagen, das bestehende Vorrichtungen und Verfahren zur Herstellung dünnwandiger Rohre bzw. Hohlprofile mit Durchmessern bzw. Abmessungen kleiner als 4 mm und Wanddicken kleiner als 0,15 mm verbessert.

### Zusammenfassung der Erfindung

Diese Aufgabe wird durch das in Anspruch 1 angegebene Verfahren und die in Anspruch 9 angegebene Vorrichtung gelöst. Weiterentwicklungen und Ausgestaltungen sind jeweils in den abhängigen Ansprüchen angegeben.

Bei dem erfindungsgemäßen Verfahren zur kontinuierlichen Herstellung von dünnwandigen, radial geschlossenen Hohlprofilen kleinen Querschnitts wird zunächst ein flaches Band aus einem NE-Metall zugeführt, dessen Dicke der Wandstärke des herzustellenden Hohlprofils entspricht. Die Breite des zugeführten Metallbandes entspricht vorzugsweise bereits dem Umfang des Hohlprofils. Falls das zugeführte Metallband breiter ist als es der Umfang des Hohlprofils erfordert, oder falls die Kanten des Metallbandes nicht hinreichend glatt sind, kann das Metallband an einer oder zwei Seiten in einem kontinuierlichen Prozess während des Zuführens maßgerecht beschnitten werden. In der vorliegenden Beschreibung bezieht sich der Ausdruck "Hohlprofile kleinen Querschnitts" auf Hohlprofile mit Querschnitten oder Kantenlängen von wenigen Millimetern, d.h. weniger als 4 mm. Der Ausdruck "dünnwandig" bezieht sich auf Wandstärken von wenigen Zehntelmillimetern, d.h. weniger als 0,15 mm. Der Begriff NE-Metall wird in dieser Beschreibung sowohl für die Metalle selbst als auch für deren Legierungen verwendet.

Das in der passenden Breite vorliegende Metallband wird in einem ein-oder mehrstufigen kontinuierlichen Umformprozess zu einem Hohlprofil geformt, welches den gewünschten Querschnitt aufweist. Der Umformprozess kann ein in mehreren Stufen nacheinander folgendes Biegen in Längsrichtung des Bandes umfassen, bspw. an entsprechend eingerichteten Rollen und Profilen. Der Querschnitt kann dabei rund, oval oder auch beliebig mehreckig sein. Das Hohlprofil weist nach dem Umformen einen in Längsrichtung des Hohlprofils verlaufenden Bereich auf, in dem die Kanten des Metallbandes bündig aneinander anliegen. Die bündig aneinander anliegenden Kanten des Hohlprofils werden nun entlang der Stoßkante miteinander verschweißt. Erfindungsgemäß erfolgt das Verschweißen mit einem Laser, der Licht mit einer Wellenlänge kleiner als 600 nm ausstrahlt, vorzugsweise in einem Bereich zwischen 550 und 450 nm. Auch Wellenlängen in einem Bereich unterhalb 450 nm können erfindungsgemäß vorteilhaft genutzt werden. Der Laser bringt Lichtenergie in einen Punkt in dem Schweißbereich ein, die beim Auftreffen auf die Oberfläche des Schweißgutes absorbiert und in Wärme umgewandelt wird. Licht in den erfindungsgemäß genutzten genannten Wellenlängenbereichen wird von vielen NE-Metallen schon bei Raumtemperatur sehr viel besser absorbiert als bspw. Licht im Infrarot-Spektrum mit Wellenlängen oberhalb von etwa 800 nm. Tatsächlich wird Licht schon bei Wellenlängen oberhalb von etwa 600 nm von vielen NE-Metallen nur noch so schlecht absorbiert, so dass Laser mit besonders hohen Ausgangsleistungen und besondere Kühlmaßnahmen erforderlich wären, um das NE-Metall zu verschweißen. Darüber hinaus ist die Absorption bei Wellenlängen größer als 600 nm stark von der Beschaffenheit der Oberfläche abhängig, während der Einfluss der Oberflächenbeschaffenheit bei den erfindungsgemäß genutzten Wellenlängen stark zurückgeht. Zudem ist wegen der starken Temperaturabhängigkeit der Absorption gerade bei größeren Wellenlängen außerdem eine schnelle Regelung der in den aktiven Schweißbereich eingebrachten Energie erforderlich, was nahezu unmöglich zu implementieren ist, so dass die Qualität der Schweißnaht stark schwanken kann. Die erfindungsgemäße Verwendung von Licht mit Wellenlängen kleiner als 600 nm erzeugt ein stabileres Schmelzbad und führt zu einem insgesamt stabileren Prozess, der bei einem hohen energetischen Wirkungsgrad des Schweißprozesses längsnahtgeschweißte Hohlprofile mit einer hohen Qualität liefert und weniger Ausschuss produziert. Außerdem kann bei der erfindungsgemäß genutzten Wellenlänge kleiner als 600 nm eine mechanische oder chemische Vorbereitung des Schweißbereichs entfallen, die eine Verringerung der Reflexion und dadurch eine Erhöhung der Absorption des Laserlichts bewirkt. Der Schweißbereich muss also nicht bspw. angeraut werden, und es muss auch keine Schicht aus einem Stoff in dem Schweißbereich aufgebracht werden, welcher als "Vermittler" die eingestrahlte Lichtenergie in Wärme umwandelt und an das Schweißgut abgibt, so dass dessen temperaturabhängiger Absorptionsgrad in für die verwendete Wellenlänge günstigere Bereiche gelangt. Dadurch entfällt die Gefahr, dass Teile des als Vermittler verwendeten Stoffes in die Schweißnaht gelangen.

Das absorbierte Licht bewirkt eine starke Erwärmung des Metalls. Um eine ausreichend hohe Energie in das zu verschweißende Material einzubringen muss das Licht stark fokussiert werden. Eine starke Fokussierung ist auch deshalb erforderlich, weil das Verschweißen nur in dem Kontaktbereich der Kanten entlang des Schlitzes erfolgen soll. Aufgrund von Wärmeleitung innerhalb des NE-Metalls können unmittelbar an den Auftreffpunkt des Laserstrahls angrenzende Bereiche sich ebenfalls stark erwärmen und ggf. aufschmelzen. Gerade bei kleinen Querschnittsabmessungen der herzustellenden Hohlprofile, bspw. bei Durchmessern kleiner als 4 mm ist die Fokussierung des Laserstrahls daher von großer Bedeutung, um das unkontrollierte Abfließen von verflüssigtem Material bzw. einen Materialabriss zu vermeiden. Bei dem erfindungsgemäßen Verfahren weist der Laserstrahl hoher Intensität am Werkstück einen Durchmesser von nicht mehr als 20% der Querschnittsabmessungen des Hohlprofils auf, vorzugsweise weniger als 10%. Versuche haben gezeigt, dass Durchmesser des Laserstrahls herunter bis zu 5% der Querschnittsabmessungen noch Schweißnähte mit einer guten Qualität ermöglichen können, wobei in diesem Fall weitere Maßnahmen erforderlich sein können, bspw. ein Bewegen des Fokuspunkts über den Schweißbereich. Bei einem Hohlprofil mit einem Durchmesser von 4 mm kann der Durchmesser des Laserstrahls demnach beispielsweise 400 µm betragen, vorzugsweise 200 µm oder weniger. Der in dieser Beschreibung verwendete Begriff Querschnittsabmessungen kann sich auf einen Durchmesser eines Hohlprofils beziehen, oder auf Kantenlängen. Je nach Kontext kann der Begriff sich auch auf Biegeradien von Kanten oder dergleichen beziehen.

Die hohe lokale Energiedichte am Auftreffpunkt des Laserstrahls auf das Werkstück bewirkt ein lokales Aufschmelzen des Materials beiderseits der Stoßkante, so dass die Schmelzen ineinanderfließen. Das Material erstarrt wieder, wenn es nicht mehr von dem Laserstahl getroffen wird, und bildet die Schweißnaht. Da das Hohlprofil kontinuierlich an dem feststehenden Laser vorbeigeführt wird, wird eine kontinuierliche Schweißnaht erzeugt, die die beiden Kanten verbindet. Um unkontrolliertes Abfließen des flüssigen Materials zu verhindern, das ja in einer kleinen Wandstärke vorliegt, müssen die eingebrachte Laserleistung und die Geschwindigkeit, mit der das Rohr an dem Laser vorbeigeführt wird, aufeinander abgestimmt sein. Bei geeigneter Abstimmung ergeben sich an der Außen- wie an der Innenseite glatte Schweißnähte, die keiner Nachbearbeitung bedürfen.

Im Gegensatz zu dem bekannten Lichtbogenschweißen nach dem Wolfram-Inertgas-Verfahren (WIG) oder Metall-Inertgas-Verfahren (MIG), die ein Reagieren der Schmelze mit der Umgebungsluft durch die Intergas-Atmosphäre verhindern und dadurch hohe Nahtqualitäten ermöglichen, können bei dem bei der Erfindung genutzten Laserschweißen wegen der besseren Steuerbarkeit des Energieeintrags auch ohne Schutzgase NE-Metalle mit Materialdicken kleiner als 0,15 mm stumpf miteinander so verschweißt werden, dass keine Nachbearbeitung der Schweißnaht, insbesondere auf der Innenseite des Rohres erforderlich ist. Bei Ausgestaltungen des Verfahrens kann die Schweißstelle trotzdem mit einem inerten Schutzgas, bspw. Argon, innen und/oder außen umströmt oder abgedeckt werden. Die Nutzung einer Schutzgasatmosphäre kann u.a. von dem zu verschweißenden Material und dessen Stärke abhängig sein.

Die Steuerung des Energieeintrags durch den Laser kann grundsätzlich entweder über die Fokussierung auf ein größeres Zielgebiet erfolgen, so dass eine zur Verfügung stehende Energie je nach Bedarf auf eine größere oder kleinere Fläche wirkt, oder durch geeignetes Hin- und Herbewegen eines besonders eng fokussierten Laserstrahls. Erfindungsgemäß erfolgt die Fokussierung auf ein größeres Zielgebiet durch ein Laserprofil , das einen zentralen Fokuspunkt großer Intensität und einen den zentralen Fokuspunkt umgebenden ringförmigen Bereich geringerer Intensität aufweist. Dadurch kann der Schweißbereich entlang eines Temperaturprofils erhitzt bzw. abgekühlt werden, wodurch sich eine sauberere Schweißnaht ergeben kann, und das Erstarrungsgefüge gezielt beeinflusst werden kann. Außerdem können Laserstrahlen auf einfache Weise gepulst werden, wobei eine Steuerung des Energieeintrags bspw. über die Pulsdauer und den Pulsabstand erfolgt.

Das Schweißen mittels Laser, auch Wärmeleitungsschweißen genannt, erzeugt eine glatte, abgerundete Schweißnaht, die nicht mehr nachbearbeitet werden muss. Die Energie verteilt sich beim Wärmeleitungsschweißen außerhalb des Bereichs in dem der Laser auftrifft nur durch Wärmeleitung in das Werkstück. Deshalb beträgt die Nahttiefe - abhängig von der Laserleistung und der Wärmeleitfähigkeit des Materials - nur einige Zehntelmillimeter bis etwa 1 Millimeter. Die Wärmeleitfähigkeit des Werkstoffs begrenzt dabei die maximale Nahttiefe. In der Regel ist die Nahtbreite größer als die Nahttiefe. Wenn die Wärme nicht schnell genug abfließen kann, steigt die Bearbeitungstemperatur über die Verdampfungstemperatur, so dass Metalldampf entsteht, und die Einschweißtiefe sprunghaft ansteigt. Der Prozess geht dann ins Tiefschweißen über.

Die direkte und kontinuierliche Fertigung des Rohres mit dem gewünschten kleinen Durchmesser und der gewünschten geringen Wanddicke reduziert in vorteilhafter Weise die bislang erforderlichen zusätzlichen Herstellungsschritte, mit denen Rohre größeren Durchmessers und größerer Wanddicke auf das gewünschte Endmaß gebracht werden müssen.

Die aufgrund des fein steuerbaren Energieeintrags in die Schweißstelle hohe Qualität der Schweißnaht an der Außenseite und vor allem an der Innenseite des erfindungsgemäß hergestellten Rohres, die keine ausgeprägte Materialwulst entlang der Schweißnaht aufweist, ermöglicht den Verzicht auf eine aufwendige Nachbearbeitung, die gerade bei kleinen Rohrdurchmessern schwierig umzusetzen ist.

Falls Hohlprofile mit noch kleineren Wandstärken und/oder Durchmessern gewünscht sind kann bei einer Ausgestaltung das erfindungsgemäß hergestellte Hohlprofil einem Reduktions- bzw. Ziehprozess unterworfen werden. Wegen der bei dem erfindungsgemäßen Herstellprozess fehlenden Materialwulst entlang der Schweißnaht kann bei dem Reduktions- bzw. Ziehprozess auf das normalerweise erforderliche Innenwerkzeug verzichtet werden. Neben der Reduzierung der Kosten wegen des Wegfalls eines Werkzeugteils entfallen außerdem die Kosten für die Reinigung des Rohrinnenraums nach der Reduzierung bzw. dem Ziehen, weil keine Ziehmittel oder Schmierstoffe in den Rohrinnenraum eingebracht werden müssen.

Bei einer oder mehreren Ausgestaltungen des Verfahrens wird die Breite des zugeführten Bandes gemessen und eine Schnittbreite in Abhängigkeit von dem Messergebnis und einem Vorgabewert nachgeführt. Die Breite entspricht etwa dem Umfang des Hohlprofils entlang der neutralen Faser. Dabei kann der Vorgabewert variiert und eine Umformvorrichtung entsprechend in Abhängigkeit von der variierenden Breite des Bandes angesteuert werden, bspw. um die für die Schweißnaht bzw. die Ausbildung einer Schweißwulst erforderliche Materialmenge anzupassen.

Bei Ausgestaltungen des Verfahrens wird ein Temperaturprofil quer zu der Schweißnaht gemessen. Das gemessene Temperaturprofil kann dazu genutzt werden, die in den Schweißpunkt eingebrachte Energie zu steuern. Das gemessene Temperaturprofil kann bspw. mit einem Vorgabeprofil verglichen werden, und die Steuerung der eingebrachten Energie kann eine Variation des Fokusdurchmessers, einer von dem Fokuspunkt auf dem Schweißgut beschriebenen Bahnkurve und/oder eine Veränderung der Pulsdauer und/oder des Pulsabstands des Laserstrahls umfassen. Es ist ebenfalls denkbar, die Zuführgeschwindigkeit in Abhängigkeit von dem gemessenen Temperaturprofil zu regeln. Das gemessene Temperaturprofil kann auch zu Qualitätsmanagements- und Dokumentationszwecken gespeichert werden.

Bei Ausgestaltungen des Verfahrens wird die Schweißnaht mit Ultraschall, Röntgen, einer Wirbelstrommessung oder anderen zerstörungsfreien Messverfahren überprüft. Die Ergebnisse der Überprüfung können bspw. zur Steuerung der in die Schweißstelle eingebachten Energie und/oder der Zuführgeschwindigkeit genutzt werden.

Bei Ausgestaltungen des Verfahrens wird eine auf das flache Band aus NE-Metall und/oder auf das verschweißte Hohlprofil wirkende Zugkraft bestimmt, und anhand der zuvor bestimmten Zugkraft werden Antriebe geregelt, die das flache Band dem Umformen und/oder dem Schweißen zuführen und/oder das verschweißte Hohlprofil einer Aufnahmevorrichtung zuführen. Eine zu große Zugkraft kann insbesondere bei zugeführten Bändern mit sehr kleiner Dicke zum Reißen des Bandes führen, wodurch der Prozess unterbrochen würde. Ähnliches gilt für die auf das verschweißte Hohlprofil wirkende Zugkraft.

An eine oder mehrere der Ausgestaltungen des Verfahrens kann sich die Anwendung eines Reduktions- oder Ziehprozesses auf das verschweißte Hohlprofil anschließen, um den Durchmesser und/oder die Wanddicke des Hohlprofils weiter zu verringern. Bei dem sich anschließenden Reduktions- bzw. Ziehprozess wird für eine Durchmesserreduzierung nur ein äußeres Werkzeug verwendet, weil das erfindungsgemäße Verschweißen eine Schweißnaht erzeugt, die ein inneres Werkzeug zur Glättung der Wulst überflüssig macht.

Eine erfindungsgemäße Vorrichtung zur kontinuierlichen Herstellung von dünnwandigen, radial geschlossenen Hohlprofilen aus NE-Metallen umfasst eine zum Zuführen eines flachen Bandes des NE-Metalls eingerichtete Zuführeinrichtung. Die Zuführeinrichtung kann bspw. eine Halterung für ein auf einer Spule oder einem Coil aufgewickeltes flaches Band des NE-Metalls umfassen. Das Band wird von der Spule abgewickelt und einer Umformvorrichtung zugeführt, welche das flache Band aus NE-Metall so in das Profil des Hohlprofils umformt, dass die gegenüberliegenden Kanten des flachen Bandes des NE-Metalls bündig stumpf aneinanderstoßen. Die Umformvorrichtung kann bspw. mehrere Rollen und Profile aufweisen, bspw. Ziehsteine, welche das Band beim Durchlaufen in Längsrichtung zu dem gewünschten Hohlprofil umformen. Die Umformvorrichtung kann außerdem zwei oder mehr in Längsrichtung des umgeformten Bandes bzw. Hohlprofils voneinander beabstandete Führungsmittel aufweisen, zwischen welchen die Kanten zumindest an einer zu verschweißenden Stelle bündig aneinander anliegend gehalten werden. Ggf. kann das Band an ein oder mehreren Stellen vor und im Werkzeug seitlich geführt werden um seitliche Bewegung des Bandes zu minimieren.

Die Vorrichtung umfasst ferner eine Schweißvorrichtung, welche die zwischen den Führungsmitteln bündig aneinander liegenden Kanten miteinander verschweißt. Die Schweißvorrichtung umfasst einen Laser, der Licht einer Wellenlänge kleiner 600 nm mit einer Energie ausstrahlt, die ein lokales Schmelzen des NE-Metalls zu beiden Seiten der Kanten bewirkt. Durch den kontinuierlichen Vorschub des umgeformten und verschweißten Hohlprofils gelangen Bereiche, in denen das Material geschmolzen ist, aus dem Bereich heraus, in welchem der Laser das Material erhitzt, und das geschmolzene Material erstarrt wieder. Die in das Material zu dessen Erhitzung eingebrachte Energie ist auf das Material, dessen Dicke sowie die Geschwindigkeit abgestimmt, mit der das Hohlprofil an der Schweißstelle vorbeigeführt wird, so dass das Material in einem unmittelbar an die bündig aneinander liegenden Kanten liegenden Bereich zwar geschmolzen wird, aber kein flüssiges Material in das Innere des Hohlprofils hineinläuft. Über die Führungsmittel kann der Abstand zwischen einer Optik des Lasers und den zu verschweißenden Kanten des Hohlprofils konstant gehalten werden. Um die Position der aneinander liegenden Kanten in Bezug auf die Optik des Lasers konstant zu halten kann vor den Führungsmitteln, die den Längsschlitz schließen, ein sogenanntes Schwert in dem zwischen den Kanten liegenden Längsschlitz angeordnet sein, um ein spiralförmiges Verdrehen zu verhindern. Erfindungsgemäß ist die Schweißvorrichtung dazu eingerichtet, den Laserstrahl gemäß einem Profil auf den Schweißbereich zu fokussieren, wobei das Profil einen zentralen Fokuspunkt großer Intensität und einen den zentralen Fokuspunkt umgebenden, ringförmigen Bereich geringerer Intensität aufweist.

Die Vorrichtung umfasst zudem eine oder mehrere Vorschubeinrichtungen, welche das verschweißte Hohlprofil zu einer Aufnahmeeinrichtung weiterbefördern, die das Hohlprofil aufnimmt. Die Vorschubeinrichtung kann beispielsweise einen oder mehrere Spannzangenabzüge, Stollenabzüge, Scheibenabzüge oder Bandabzüge bekannter Bauart umfassen, wobei auch unterschiedliche Vorschubeinrichtungen kombiniert sein können.

Bei einer oder mehreren Ausgestaltungen der Vorrichtung ist vor der Umformvorrichtung eine Messvorrichtung zur Ermittlung der Zugkraft vorgesehen. Die ermittelte Zugkraft kann einer Regelung als Istwert zugeführt werden und mit einem Sollwert zur Regelung der Antriebe der Vorrichtung eingesetzt werden, etwa um die Geschwindigkeit der Zuführung des Bandes aus NE-Metall zu regeln. Außerdem kann eine Mess- und/oder Regelvorrichtung hinter der Schweißeinrichtung angeordnet sein, welche die auf das verschweißte Hohlprofil ausgeübte Zugkraft misst und/oder den Antrieb der Vorschubeinrichtung regelt, welche das verschweißte Hohlprofil der Aufnahmeeinrichtung zuführt. Die Regelung der Ziehkraft zwischen der Vorschubeinrichtung und der Aufnahmeeinrichtung kann bspw. durch einen Tänzer erfolgen, der ein Durchhängen des verschweißten Hohlprofils erfasst und einer Antriebssteuerung der Aufnahmeeinrichtung entsprechende Signale zuführt.

Bei einer oder mehreren Ausgestaltungen umfasst die Vorrichtung außerdem eine vor der Umformeinrichtung angeordnete Schneideeinrichtung, mittels derer eine oder beide Kanten des zugeführten flachen Bandes aus NE-Metall beschnitten werden, wobei die Breite des beschnittenen Bandes dem Umfang des Hohlprofils entspricht. Bei diesen Ausgestaltungen können ohne großen Aufwand Hohlprofile mit unterschiedlichen Umfängen hergestellt werden, indem das zugeführte Metallband auf die erforderliche Breite zugeschnitten und die weiteren Werkzeuge der Vorrichtung angepasst werden.

An einer oder beiden Kanten des Bandes abgeschnittene Teile können bei einer oder mehreren Ausgestaltungen einer zur Aufnahme von Schnittresten vorgesehenen Vorrichtung zugeführt werden.

Bei einer oder mehreren Ausgestaltungen der mit einer Schneideeinrichtung ausgestatteten Vorrichtung ist hinter der Schneideeinrichtung eine Messeinrichtung zur Messung der Breite des zugeschnittenen Bandes vorgesehen. Anhand der Messwerte kann die Schneideeinrichtung angesteuert werden, um eine gewünschte Breite des NE-Metallbandes über einen langen Zeitraum einzuhalten. Der Schneideeinrichtung können entsprechende Vorgabewerte zugeführt werden, mit denen die gemessene Breite des NE-Metallbandes verglichen werden um ein Steuersignal für die Einstellung der Schneideeinrichtung zu erzeugen. Die Breite entspricht etwa dem Umfang des Hohlprofils entlang der neutralen Faser.

Die Schweißvorrichtung kann dazu eingerichtet sein, auch bei langsamen Zuführgeschwindigkeiten des NE-Metallbandes die Kanten mit der geforderten Qualität zu verschweißen.

Bei einer oder mehreren Ausgestaltungen umfasst die Vorrichtung außerdem eine Messeinrichtung zur Bestimmung eines Temperaturprofils quer zu der Schweißnaht. Das gemessene Temperaturprofil kann der Schweißvorrichtung zur Steuerung der abgegebenen Energie, der Zuführeinrichtung und/oder der Vorschubeinrichtung zur Steuerung der Zuführgeschwindigkeit zugeführt werden.

Bei einer oder mehreren Ausgestaltungen umfasst die Vorrichtung außerdem eine Messeinrichtung zur Messung mindestens einer Abmessung des Hohlprofils nach dem Verschweißen. Diese Messeinrichtung kann zur integrierten Qualitätskontrolle eingesetzt werden, genauso wie eine bei einer oder mehreren Ausgestaltungen vorgesehene Messeinrichtung zur Prüfung der Schweißnaht und/oder von Materialfehlern bzw. Inhomogenitäten des Materials.

Die Abmessungen können vorzugsweise berührungslos gemessen werden, bspw. mittels Laser

Bei einer oder mehreren Ausgestaltungen ist zwischen der Schweißvorrichtung und der Aufnahmeeinrichtung ein Weller oder Corrugator zur Umformung des verschweißten Hohlprofils zu einem Wellrohr mit Parallel- oder Schraubenwellung vorgesehen. Der Weller oder Corrugator kann dabei bei einer oder mehreren Ausgestaltungen dazu eingerichtet sein, Abschnitte des Rohres selektiv mit dem Wellenprofil zu versehen, und andere Abschnitte unprofiliert zu lassen.

In festgelegten Abständen voneinander entlang des Hohlprofils angeordnete gewellte Bereiche können bei der Herstellung von Rohren für Wärmetauscher vorteilhaft sein. Die glatten Abschnitte können dabei in dem Wärmetauscher liegen, bspw. mit flächigen Elementen verschweißt sein oder bündig thermisch gekoppelt daran anliegen, welche die wirksame Oberfläche des Wärmetauschers vergrößern, während die Rohre in den gewellten Bereichen gebogen sind, um eine serpentinenartige Führung der Rohre an oder in den flächigen Elementen zu ermöglichen. Das Biegen insbesondere von sehr dünnwandigen Rohren führt häufig zu unerwünschtem Abknicken und der damit einhergehenden unerwünschten Profilverengung; außerdem kann an einer Knickstelle die Dichtigkeit eines Rohrs nicht mehr gewährleistet werden. Eine beim Biegen dünnwandiger Rohre häufig genutzte Abstützung von der Innenseite des Rohres ist bei der erfindungsgemäßen kontinuierlichen Herstellung des Rohres nicht nutzbar. In den gewellten Bereichen können aber auch dünnwandige Rohre definiert gebogen werden, ohne den Querschnitt unkontrolliert zu verändern. Da die Rohre zusammen mit den gewellten Bereichen in einem Herstellvorgang kontinuierlich hergestellt werden können entfällt das bislang notwendige Verbinden gerader Rohrabschnitte mit gebogenen Rohrabschnitten, mit denen ein Richtungswechsel erreicht wird.

Die Wellung kann auch in geraden Abschnitten vorgesehen sein, bspw. um Strömungsverhältnisse eines in dem Hohlprofil strömenden Fluids zu beeinflussen, oder um die für einen Wärmeübergang zur Verfügung stehende Oberfläche zu vergrößern.

Bei einer oder mehreren Ausgestaltungen wird vor dem Verschweißen ein mit einer elektrischen Isolierung umgebener Leiter in das Hohlprofil eingelegt, bspw. bei der Umformung, bevor die Kanten des NE-Metallbandes abschließend zusammengebracht werden. Dadurch ist bspw. die kontinuierliche Herstellung langer Koaxialleiter möglich. Auch der solcherart hergestellte Koaxialleiter kann nach dem Verschweißen des Hohlprofils einem Weller oder Corrugator zugeführt sein, so dass ein flexibel verlegbares Koaxialkabel entsteht. Nach dem Durchlaufen des Corrugators kann das gewellte Koaxialkabel mit einer elektrischen Isolierung umhüllt werden, bspw. durch Umspritzen oder Umwickeln.

Mit dem vorstehend beschriebenen Verfahren, bei dem Laserlicht mit Wellenlängen kleiner als 600 nm zum Verschweißen von dünnwandigem NE-Metallblechen genutzt wird, können auf einfache Weise Hohlprofile mit Wandstärken unter 0,15 mm und Durchmessern bzw. Abmessungen kleiner als 4 mm auf einem hohen Qualitätsniveau ohne aufwendige Nachbearbeitung hergestellt werden. Durch die Nutzung von Fokusdurchmessern des Laserstrahls von unter 400 µm wird beim kontinuierlichen Verschweißen eine ausreichend kleine Wärmeeinflusszone im Verhältnis zu den Abmessungen des Hohlprofils gewährleistet, so dass keine Materialabrisse auftreten und eine Schweißnaht erzeugt wird, die keine ausgeprägte Wulst auf der Rohrinnenseite aufweist. Wegen der direkten Herstellung des Hohlprofils aus NE-Metallbändern mit einer geringen Wandstärke kann auf ein anschließendes Ziehen des Rohres verzichtet werden.

Falls noch kleinere Durchmesser gefordert sind, kann beim nachfolgenden Ziehen des Rohres auf einen Innenkörper, bspw. eine Mandrille, einen Stopfen oder einen Dorn verzichtet werden. Durch den Entfall der Innenwerkzeuge ergeben sich dann zumindest geringere Kosten; ebenso werden Aufwand und Kosten zur Reinigung der Werkzeuge und des Hohlprofils stark reduziert, da im Inneren der Rohre kein Ziehmittel benötigt wird. Mit dem vorstehend beschriebenen Verfahren können ohne einen sich an das Verschweißen anschließenden Ziehprozess bereits Kupferrohre mit einem Durchmesser von Ø 2,0 mm und einer Wandstärke von 0,10 mm bei Schweißgeschwindigkeiten größer 6 m/min hergestellt werden, wobei die Schweißnahtqualität über mehrere Stunden konstant gehalten werden kann.

Die aus dem erfindungsgemäßen Verfahren resultierende hohe Schweißnahtqualität ermöglicht Zugspannungen senkrecht zur Schweißnaht, die den Festigkeitswerten des Grundwerkstoffes gleichkommt. Dies ermöglicht eine Druckbeaufschlagung in gleicher Höhe wie bei nahtlosen spannungsfrei geglühten Rohren identischer Durchmesser und Wandstärken.

### Kurze Beschreibung der Zeichnung

Nachfolgend wird die Erfindung anhand einer Ausführungsform unter Bezugnahme auf die begleitenden Figuren exemplarisch näher erläutert. Alle Figuren sind rein schematisch und nicht maßstäblich. Es zeigen:
- Fig. 1: ein exemplarisches Beispiel des erfindungsgemäßen Verfahrens zur kontinuierlichen Herstellung von dünnwandigen radial geschlossenen Hohlprofilen,
- Fig. 2: ein exemplarisches Beispiel einer erfindungsgemäßen Vorrichtung zur kontinuierlichen Herstellung von dünnwandigen radial geschlossenen Hohlprofilen,
- Fig. 3: Bilder einer Schweißnaht eines nach dem erfindungsgemäßen Verfahren hergestellten Hohlprofils, und
- Fig. 4: eine schematische Darstellung eines aus dem Stand der Technik bekannten Verfahrens zur Verringerung der Wanddicke und des Durchmessers eines Rohres.

Gleiche oder ähnliche Elemente sind in den Figuren mit gleichen oder ähnlichen Bezugszeichen versehen.

### Ausführungsbeispiel

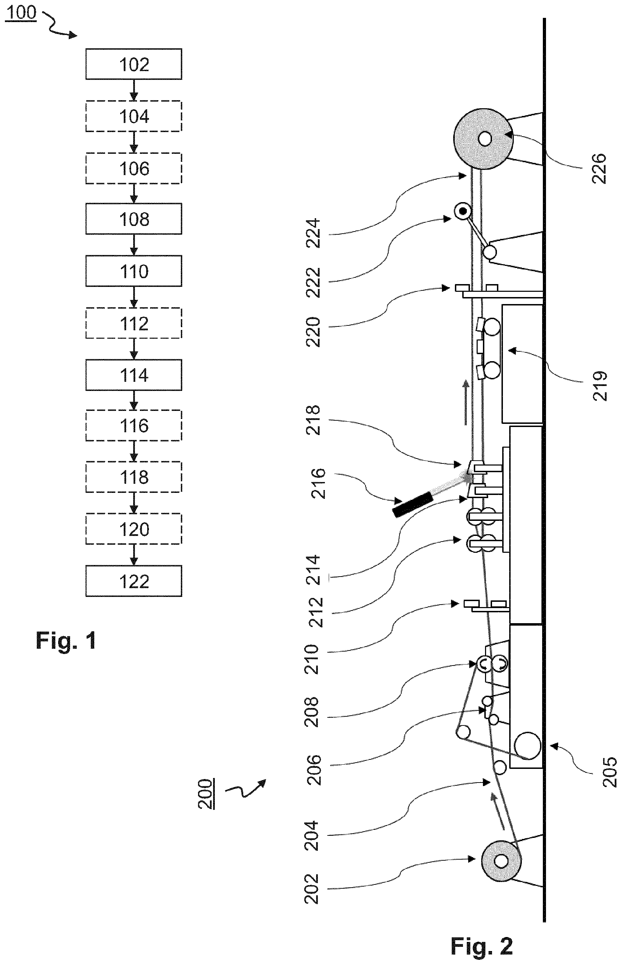

Figur 1 zeigt Schritte eines Verfahrens 100 zur Herstellung von dünnwandigen radial geschlossenen Hohlprofilen gemäß einem Aspekt der Erfindung. In Schritt 102 des Verfahrens wird ein flaches Band aus NE-Metall mit einer ersten Zuführgeschwindigkeit einer Umformvorrichtung zugeführt. Bspw. wird ein flaches Kupferband von einem Coil abgewickelt. In der Umformvorrichtung wird das zugeführte flache Band in Schritt 108 in eine dem gewünschten Hohlprofil entsprechende Form umgeformt, bspw. ein Rundrohr oder ein Vierkantrohr. Das Umformen kann bspw. mittels eines Roll-Formwerkzeugs erfolgen.

Vor dem Umformen kann in einer Schneideinrichtung ein optionaler Schritt 104 ausgeführt werden, in welchem eine oder beide Kanten des Bandes aus NE-Metall beschnitten oder auf andere Weise vorbereitet werden. Hierdurch kann auch bei schlechter Kantenqualität des Bandes aus NE-Metall die Breite des Bandes gleichmäßig und präzise eingestellt und ggf. und die Kanten für den anschließenden Schweißvorgang vorbereitet werden. Der Schneideinrichtung können Messwerte einer Messvorrichtung zugeführt sein, welche die Breite des NE-Metallbandes nach dem Beschneiden erfasst.

Beim Umformen werden die Kanten des Bandes mittels Führungselementen so geführt, dass ein Verdrehen vor dem Verschweißen verhindert wird, und die bündig aneinander liegenden Kanten in einer definierten Lage und einem definierten Abstand an einer Schweißvorrichtung vorbeigeführt werden. Die Führungselemente können bspw. ein oder mehrere Führungsschwerter und Führungsbuchsen umfassen, welche an die zu fertigende Hohlgeometrie angepasst sind. Das Schließen der Geometrie kann bspw. mittels Ziehsteinen erfolgen.

Nach dem Umformen liegen zwei gegenüberliegende Kanten des flachen Bandes in einem Kontaktbereich bündig aneinander an. In Schritt 110 werden die in dem Kontaktbereich bündig aneinander anliegenden Kanten kontinuierlich miteinander verschweißt. Das Verschweißen erfolgt mittels eines Lasers, der Licht einer Wellenlänge kleiner als 600 nm ausstrahlt. Ggfs. kann angepasst an die erforderliche Schweißnahtqualität eine Abdeckung der Schweißnaht mittels Schutzgas von der Außen- und/oder Innenseite des Hohlprofils erfolgen.

Nach dem Verschweißen wird das nunmehr radial geschlossene Hohlprofil aus dem Schweißbereich abgezogen, Schritt 114, und in Schritt 122 einer Aufnahmeeinrichtung zur Aufnahme zugeführt. Das Abziehen erfolgt mittels einer Vorschubeinrichtung, bspw. mittels Spannzangenabzug, Stollenabzug oder Bandabzug.

Zur Überwachung der Qualität der Schweißnaht kann in einem optionalen Schritt 112 das Temperaturprofil quer zur Schweißnaht bestimmt werden. Das ermittelte Temperaturprofil kann einer Steuerung des Lasers und anderer Elemente einer das Verfahren implementierenden Vorrichtung zugeführt werden, insbesondere auch einem oder mehreren Antrieben, welche die Zuführgeschwindigkeit des Bandes aus NE-Metall bzw. die Geschwindigkeit regeln, mit der das verschweißte Hohlprofil aus dem Schweißbereich abgezogen wird.

Das Verfahren kann optional auch eine Ermittlung der Zugkraft auf das Band vor dem Umformen, Schritt 104, und/oder auf das Hohlprofil nach dem Verschweißen, Schritt 120, umfassen. Die ermittelte Zugkraft kann ebenfalls den einem oder mehreren Antrieben als Messgröße zur Regelung zugeführt werden.

Das Verfahren kann außerdem einen optionalen Schritt 116 umfassen, in welchem eine oder mehrere Abmessungen des verschweißten Hohlprofils bestimmt werden. Die ermittelten Abmessungen können vor allem als Eingangsgrößen zur Regelung des Umformvorgangs und des Schneidvorgangs zur Einstellung der Breite des Bandes zugeführt werden.

Das Verfahren kann außerdem einen optionalen Schritt 118 umfassen, in dem die Qualität der Schweißnaht und/oder das Schweißgut zerstörungsfrei auf Materialfehler überprüft werden, bspw. mittels Wirbelstromprüfung, Ultraschall oder Röntgen.

Sich an das Verfahren anschließende Zieh- oder Walzprozesse, mittels derer die Schweißnahtoberfläche noch weiter vergleichmäßigt oder geglättet werden, sind in der Figur nicht dargestellt. Ebenfalls in der Figur nicht dargestellt sind anschließende Ziehprozesse zur Reduzierung des Durchmessers des Hohlprofils, sowie Prozesse mittels derer eine Wellung in das Hohlprofil eingebracht oder das Hohlprofil in Teilstücke geschnitten wird.

Figur 2 zeigt ein exemplarisches Beispiel einer erfindungsgemäßen Vorrichtung zur kontinuierlichen Herstellung von dünnwandigen radial geschlossenen Hohlprofilen. Von einem Wickel oder Abwickler 202 wird ein dünnes Band 204 aus NE-Metall abgewickelt, bspw. ein Band aus Kupfer. Das Band 204 wird einem Roll-Formwerkzeug 212 zugeführt, mittels dessen es in die Form des gewünschten Hohlprofils gebracht wird, bspw. zu einem längsgeschlitzten Rund- oder Vierkantrohr geformt wird. Zwischen dem Wickel oder Abwickler 202 und dem Roll-Formwerkzeug 212 kann eine Schneidvorrichtung 208 vorgesehen sein, welche das Band 204 auf eine benötigte Breite zuschneidet bzw. eine oder beide Kanten des Bandes 204 zuschneidet, um saubere und glatte Kanten zu erhalten. Zur Aufnahme abgeschnittener Teile des Bandes 204 kann eine Aufnahmevorrichtung 205 vorgesehen sein. Die Breite des zugeschnittenen Bandes 204 kann in einer Bandbreiten-Messvorrichtung 210 überprüft werden. Die Messergebnisse können der Schneideeinrichtung 208 zur Regelung zugeführt sein. Außerdem kann zwischen dem Wickel oder Abwickler 202 und dem Roll-Formwerkzeug 212 eine Messvorrichtung 206 zur Ermittlung der Zugkraft angeordnet sein, deren Messwerte bspw. zur Regelung von Antrieben der Vorrichtung verwendet werden können. Die nach dem Formen des Hohlprofils aneinander liegenden Kanten des Bandes können mit einem oder mehreren Führungselementen 214 vor der Laser-Schweißvorrichtung 216 so geführt werden, dass ein Verdrehen des Hohlprofils vor dem Schweißen verhindert wird und der Durchlaufabstand unterhalb einer Optik der Laser-Schweißvorrichtung 216 eingehalten wird. Die Führungselemente können ein oder mehrere Führungsschwerter und an das Hohlprofil angepasste Führungsbuchsen umfassen. Die Geometrie des zu verschweißenden Hohlprofils wird mittels Ziehsteinen oder Führungsbuchsen 218 geschlossen, so dass die Kanten des zu dem Hohlprofil umgeformten Bandes 204 im Bereich der Laser-Schweißvorrichtung 216 aneinander anliegen. Die Laser-Schweißvorrichtung 216 strahlt hochenergetisches Licht bei einer Wellenlänge kleiner als 600 nm aus, vorzugsweise in einem Bereich zwischen 550 und 450 nm. Auch Wellenlängen in einem Bereich unterhalb 450 nm können erfindungsgemäß vorteilhaft genutzt werde. Der Schweißbereich kann über eine in der Figur nicht dargestellte Schutzgasvorrichtung innerhalb oder außerhalb des Hohlprofils mit einem Schutzgas, bspw. Argon, abgedeckt werden, um Reaktionen des Schweißgutes mit der Atmosphäre zu unterbinden. Der Vorschub des verschweißten Hohlprofils 224 erfolgt mittels einer Vorschubeinrichtung 219. Die Vorschubeinrichtung 219 kann bspw. einen oder mehrere Spannzangenabzüge, Stollenabzüge, Scheibenabzüge oder Bandabzüge umfassen, oder Kombinationen davon. Vor dem Aufwickeln des verschweißten Hohlprofils 224 auf einem Aufwickler 226 können eine oder mehrere Abmessungen des Hohlprofils 224 mittels eines Messgeräts 220 erfasst werden, vorzugsweise berührungslos. Zur Erfassung der auf das Hohlprofil 224 wirkendenden Zugkräfte kann eine weitere Zugkraft-Messvorrichtung 222 vor dem Aufwickler 226 vorgesehen sein.

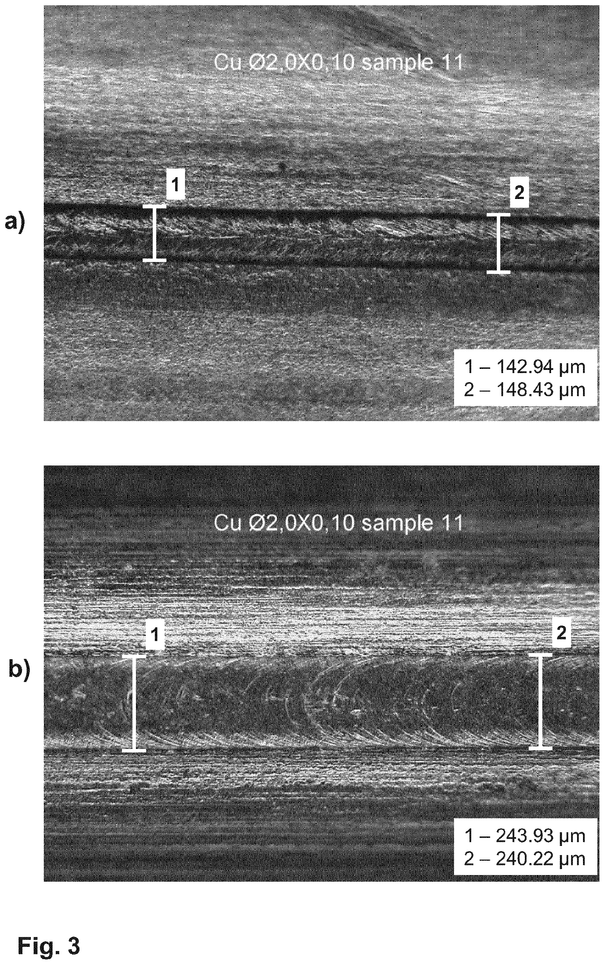

Figur 3 zeigt Bilder einer Schweißnaht eines nach dem erfindungsgemäßen Verfahren hergestellten Hohlprofils. Das Hohlprofil ist ein Kupferrohr mit einem Durchmesser von 2 mm und einer Wanddicke von 0,1 mm, das bei einer Vorschubgeschwindigkeit von 6 m/min kontinuierlich aus einem Kupferband umgeformt und verschweißt wurde. Die Schweißstelle war dabei innen und außen mit Argon abgedeckt. Figur 3 a) zeigt die Schweißnaht an der Außenseite des Hohlprofils, die eine Breite zwischen 140 und 150 µm aufweist. Figur 3 b) zeigt eine Aufnahme der Innenseite des Hohlprofils, auf der die Schweißnaht eine Breite von etwa 242 µm aufweist. Gut zu erkennen ist auch, dass die Schweißnähte sowohl innen als auch außen sehr gleichmäßig ausfallen, so dass eine Nachbearbeitung für die meisten Anwendungsfälle nicht erforderlich sein dürfte. Ein Abschnitt des verfahrensgemäß hergestellten Rohres wurde einem Drucktest unterzogen und hielt Drücken von über 200 bar stand.

Figur 4, die eine schematische Darstellung eines aus dem Stand der Technik bekannten Verfahrens zur Verringerung der Wanddicke und des Durchmessers eines Rohres zeigt, wurde bereits weiter oben mit Bezug auf den Stand der Technik beschrieben.

### Bezugszeichenliste

| | | | |
|---|---|---|---|
| 1 | Rohr | 222 | Zugkraft-Messvorrichtung |
| 2 | Form | 224 | verschweißtes Hohlprofil |
| 3 | Stopfen | 226 | Aufwickler |
| 100 | Verfahren | | |
| 102 | Band zuführen | | |
| 104 | Zugkraft bestimmen | | |
| 106 | Kanten beschneiden | | |
| 108 | Hohlprofil formen | | |
| 110 | Verschweißen | | |
| 112 | Temperaturprofil bestimmen | | |
| 114 | Hohlprofil abziehen | | |
| 116 | Abmessungen bestimmen | | |
| 118 | Qualität bestimmen | | |
| 120 | Zugkraft bestimmen | | |
| 122 | zur Aufnahmeeinrichtung zuführen | | |
| 200 | Vorrichtung | | |
| 202 | Wickel/Abwickler | | |
| 204 | Band aus NE-Metall | | |
| 205 | Aufnahmevorrichtung für Verschnitt | | |
| 206 | Zugkraft-Messvorrichtung | | |
| 208 | Schneideeinrichtung | | |
| 210 | Bandbreiten-Messvorrichtung | | |
| 212 | Roll-Formwerkzeug | | |
| 214 | Führungselement | | |
| 216 | Laser-Schweißvorrichtung | | |
| 218 | Ziehstein/Führungsbuchsen | | |
| 219 | Vorschubeinrichtung | | |
| 220 | Messgerät | | |

## Patentansprüche

1. Verfahren (100) zur kontinuierlichen Herstellung von radial geschlossenen Hohlprofilen (224) aus NE-Metallen mit einer Wandstärke von weniger als 0,15 mm und Querschnitten kleiner als 4 mm, umfassend:
- Zuführen (102) eines flachen Bandes (204) des NE-Metalls mit einer ersten Zuführgeschwindigkeit zu einer Umformvorrichtung (212), wobei die Dicke des Bandes der Wandstärke des herzustellenden Hohlprofils (224) entspricht,
- kontinuierliches Umformen (108) des zugeführten flachen Bandes (204) in eine dem Hohlprofil (224) entsprechende Form, wobei zwei gegenüberliegende Kanten des flachen Bandes (204) nach dem Umformen in einem sich in Längsrichtung des Hohlprofils erstreckenden Kontaktbereich bündig aneinander anliegen,
- kontinuierliches Verschweißen (110) der in dem Kontaktbereich bündig aneinander anliegenden Kanten ohne vorherige Behandlung zur Reduzierung von Reflexionen, wobei die zu verschweißenden Kanten mit der ersten Zuführgeschwindigkeit an einem in Bezug auf eine das Verfahren implementierende Vorrichtung (200) feststehenden Schweißbereich vorbeigeführt werden, und wobei eine Fläche in dem Schweißbereich mittels eines Lasers (216) erhitzt wird, welcher Licht einer Wellenlänge kleiner als 600 nm abstrahlt, und wobei die erhitzte Fläche einen Durchmesser aufweist, der kleiner als 20% der Querschnittsabmessung des Hohlprofils ist,
- Abziehen (114) des verschweißten Hohlprofils (224) aus dem Schweißbereich, und
- Aufnehmen (122) des verschweißten Hohlprofils (224) in einer Aufnahmeeinrichtung (226),
**dadurch gekennzeichnet, dass** der Laserstrahl gemäß einem Profil auf den Schweißbereich fokussiert ist, welches einen zentralen Fokuspunkt großer Intensität und einen den zentralen Fokuspunkt umgebenden, ringförmigen Bereich geringerer Intensität aufweist.

2. Verfahren (100) nach Anspruch 1, wobei zumindest der Schweißbereich beim Erhitzen mit einem inerten Schutzgas innen und/oder außen umströmt oder abgedeckt ist.

3. Verfahren (100) nach Anspruch 1 oder 2, außerdem umfassend:
- Beschneiden (106) einer oder zweier Kanten des flachen Bandes des NE-Metalls vor dem Umformen.

4. Verfahren (100) nach Anspruch 3, außerdem umfassend:
- Messen der Breite des beschnittenen Bandes des NE-Metalls vor und/oder Messen (116) zumindest einer Abmessung des Hohlprofils (224) nach dem Verschweißen, und
- Regeln der Schnittbreite und/oder Ansteuern einer Vorrichtung (212) zum Umformen in Abhängigkeit von dem Messergebnis und einem Vorgabewert.

5. Verfahren (100) nach einem der vorhergehenden Ansprüche, außerdem umfassend:
- Messen (112) des Temperaturprofils quer zu der Schweißnaht und steuern der in den Schweißbereich eingebrachten Energie in Abhängigkeit von einem Vergleich des Temperaturprofils mit einem Vorgabeprofil.

6. Verfahren (100) nach einem der vorhergehenden Ansprüche, außerdem umfassend:
- Überprüfen (118) der Schweißnaht mittels Ultraschall, Wirbelstrommessung und/oder Röntgen.

7. Verfahren (100) nach einem der vorhergehenden Ansprüche, außerdem umfassend:
- Bestimmen (104, 120) der Zugkraft auf das flache Band des NE-Metalls und/oder das verschweißte Hohlprofil, und
- Regeln von Antrieben, die das flache Band und/oder das verschweißte Hohlprofil dem Umformen, dem Schweißen und/oder dem Aufnehmen in einer Aufnahmevorrichtung (226) zuführen.

8. Verfahren (100) nach einem oder mehreren der vorhergehenden Ansprüche, außerdem umfassend:
- Anwenden eines Reduktions- bzw. Ziehprozesses auf das verschweißte Hohlprofil (224), bei dem eine oder mehrere Querschnittsabmessungen und/oder die Wanddicke des Hohlprofils (224) verringert werden, wobei bei dem Reduktions- bzw. Ziehprozess lediglich ein äußeres Werkzeug verwendet wird.

9. Vorrichtung (200) zur kontinuierlichen Herstellung von radial geschlossenen Hohlprofilen (224) aus NE-Metallen mit einer Wandstärke von weniger als 0,15 mm und Querschnitten kleiner als 4 mm, umfassend:
- eine zum Zuführen eines flachen Bandes (204) des NE-Metalls eingerichtete Zuführeinrichtung (202),
- eine Umformvorrichtung (212), welche das flache Band (204) aus NE-Metall so in das Profil des Hohlprofils (224) umformt, dass die gegenüberliegenden Kanten des flachen Bandes des NE-Metalls bündig stumpf aneinanderstoßen,
- zwei voneinander beabstandete Führungsmittel (214, 218), zwischen welchen die Kanten bündig aneinander anliegend gehalten werden,
- eine Schweißvorrichtung (216), welche die zwischen den Führungsmitteln (214, 218) bündig aneinander liegenden Kanten miteinander verschweißt, wobei die Schweißvorrichtung (216) einen Laser umfasst, welcher Laser geeignet ist, in dem Schweißbereich eine Fläche mit einem Durchmesser kleiner als 20% der Querschnittsabmessung des Hohlprofils zu erhitzen und welcher Laser Licht einer Wellenlänge kleiner 600 nm mit einer Energie ausstrahlt, die ein lokales Schmelzen des NE-Metalls zu beiden Seiten der aneinanderstoßenden Kanten bewirkt,
- eine Vorschubeinrichtung (219), welche das verschweißte Hohlprofil (224) weiterbefördert, und
- eine Aufnahmeeinrichtung (226), die das Hohlprofil (224) aufnimmt, **dadurch gekennzeichnet, dass** die Schweißvorrichtung (216) dazu eingerichtet ist, den Laserstrahl gemäß einem Profil auf den Schweißbereich zu fokussieren, wobei das Profil einen zentralen Fokuspunkt großer Intensität und einen den zentralen Fokuspunkt umgebenden, ringförmigen Bereich geringerer Intensität aufweist.

10. Vorrichtung (200) nach Anspruch 9, außerdem umfassend:
- eine vor der Umformvorrichtung (212) angeordnete Messvorrichtung (206) zur Ermittlung der auf das zugeführte Band (204) wirkenden Zugkraft, wobei die ermittelte Zugkraft zur Steuerung von Antrieben der Vorrichtung (200) zugeführt sind.

11. Vorrichtung (200) nach Anspruch 9 oder 10, außerdem umfassend:
- eine hinter der Schweißvorrichtung (216) angeordnete Mess- und/oder Regeleinrichtung (220), welche die auf das verschweißte Hohlprofil (224) wirkende Zugkraft misst, wobei die gemessene Zugkraft einem Antrieb der Vorschubeinrichtung (219) zur Regelung zugeführt ist.

12. Vorrichtung (200) nach Anspruch 10, 11 oder 12, außerdem umfassend:
- eine vor der Umformeinrichtung (212) angeordnete Schneideeinrichtung (208), mittels derer eine oder beide Kanten des zugeführten flachen Bandes (204) aus NE-Metall beschnitten werden, wobei die Breite des beschnittenen Bandes dem Umfang des Hohlprofils (224) entlang der neutralen Faser entspricht.

13. Vorrichtung (200) nach Anspruch 12, außerdem umfassend:
- eine Vorrichtung (205) zur Aufnahme von Schnittresten.

14. Vorrichtung (200) nach Anspruch 12 oder 13, außerdem umfassend:
- eine hinter der Schneideeinrichtung (208) angeordnete Messeinrichtung (210) zur Messung der Breite des zugeschnittenen flachen Bandes aus NE-Metall.

15. Vorrichtung (200) nach einem oder mehreren der Ansprüche 9 bis 14, außerdem umfassend:
- eine Messeinrichtung zur Bestimmung eines Temperaturprofils quer zu der Schweißnaht, wobei das gemessene Temperaturprofil der Schweißvorrichtung (216) zur Steuerung der abgegebenen Energie und/oder der Zuführeinrichtung (202) und/oder der Vorschubeinrichtung (219) zur Steuerung der Zuführgeschwindigkeit zugeführt ist.

16. Vorrichtung (200) nach einem oder mehreren der Ansprüche 9 bis 15, außerdem umfassend:
- eine Messeinrichtung (220) zur Messung mindestens einer Abmessung des Hohlprofils (224) nach dem Verschweißen (110).

17. Vorrichtung (200) nach einem oder mehreren der Ansprüche 9 bis 16, außerdem umfassend:
- eine Messeinrichtung zur Prüfung der Schweißnaht und/oder von Materialfehlern bzw. Inhomogenitäten des Materials.

## Claims

1. A method (100) for the continuous production of radially closed hollow profiles (224) made from non-ferrous metals with a wall thickness of less than 0.15 mm and cross sections smaller than 4 mm, comprising:
- Feeding (102) a flat strip (204) of non-ferrous metal at a first feeding speed to a forming device (212), wherein the thickness of the strip corresponds to the wall thickness of the hollow profile (224) to be produced,
- continuous forming (108) of the fed flat strip (204) into a form corresponding to the hollow profile (224), wherein two opposite edges of the flat strip (204) lie flush against each other in a contact area extending in the longitudinal direction of the hollow profile,
- continuous welding (110) of the edges lying flush against each other in the contact area without prior treatment for reducing reflections, wherein the edges to be welded are moved at the first feed speed past a welding area fixed in relation to a device (200) implementing the method, and wherein a surface in the welding area is heated by means of a laser (216), which emits light of a wave length smaller than 600 nm, and wherein the heated surface has a diameter, which is less than 20% of the cross-sectional dimension of the hollow profile,
- pulling (114) the welded hollow profile (224) out of the welding area,
- mounting (122) the hollow profile (224) in a mounting device (226),
**characterized in that** the laser beam is focused according to a profile on the welding area, which has a central focus point of great intensity and a ring-shaped area of lower intensity surrounding the central focus point.

2. The method (100) according to claim 1, wherein at the least the welding area during heating is surrounded or covered on the inside and/or outside with an inert protective gas.

3. The method (100) according to claim 1 or 2, also comprising:
- Trimming (106) of one or two edges of the flat strip of the non-ferrous metal before the forming.

4. The method (100) according to claim 3, also comprising:
- Measuring the width of the trimmed strip of the non-ferrous metal before and/or measuring (116) at least one dimension of the hollow profile (224) after the welding and
- controlling the cut width and/or controlling a device (212) for the forming as a function of the measurement result and a default value.

5. The method (100) according to any one of the preceding claims, also comprising:
- Measuring (112) the temperature profile transverse to the weld seam and controlling the energy introduced into the weld area as a function of a comparison of the temperature profile with a default profile.

6. The method (100) according to any one of the preceding claims, also comprising:
- Checking (118) the weld seam by means of ultrasound, eddy current measurement or X-rays.

7. The method (100) according to any one of the preceding claims, also comprising:
- Determining (104, 120) the tensile force on the flat strip of non-ferrous metal and/or the welded hollow profile, and
- controlling drives, which feed the flat strip and/or the welded hollow profile to the forming, the welding and/or the mounting in a mounting device (226).

8. The method (100) according to one or more of the preceding claims, also comprising:
- Using a reducing or drawing process on the welded hollow profile (224), in which one or more cross-sectional dimensions and/or the wall thickness of the hollow profile (224) are reduced, wherein during the reduction or drawing process only an external tool is used.

9. A device (200) for the continuous production of radially closed hollow profiles (224) made of non-ferrous metals with a wall thickness of less than 0.15 mm and cross sections smaller than 4 mm, comprising:
- A feed device (202) set up for feeding a flat strip (204) of the non-ferrous metal,
- a forming device (212), which transforms the flat strip (204) made of non-ferrous metal into the profile of the hollow profile (224) such that the oppposite edges of the flat strip of the non-ferrous metal abut flush against one another,
- two guide means (214, 218) spaced apart from one another, between which the edges are held lying flush against one another,
- a welding device (216), which welds together the edges lying flush against one another between the guide means (214, 218), wherein the wedling device (216) comprises a laser, which laser is suitable, for heating a surface in the welding area with a diameter less than 20% of the cross-sectional dimension of the hollow profile and which laser emits light of a wave length smaller than 600 nm with an energy, which brings about a local melting of the non-ferrous metal on both sides of the edges abutting one another,
- a feeding device (219), which further transports the welded hollow profile (224), and
- a mounting device (226), which mounts the hollow profile (224), **characterized in that** the welding device (216) is set up to focus the laser beam according to a profile on the welding area, wherein the profile has a central focus point of great intensity and a ring-shaped area of lower intensity surrounding the central focus point.

10. The device (200) according to claim 9, also comprising:
- A measuring device (206) arranged upstream of the forming device (212) for determining the tensile force acting on the fed strip (204), wherein the determined tensile force is fed to control drives of the device (200).

11. The device (200) according to claim 9 or 10, also comprising:
- A measuring and/or control device (220) arranged downstream of the welding device (216), which measures the tensile force acing on the welded hollow profile (224), wherein the measured tensile force is fed to a drive of the feeding device (219) for regulation.

12. The device (200) according to claim 10, 11 or 12, also comprising:
- A cutting device (208) arranged upstream of the forming device (212) by means of which one or both edges of the fed flat strip (204) made of non-ferrous metal are trimmed, wherein the width of the trimmed strip corresponds to the circumference of the hollow profile (224) along the neutral fiber.

13. The device (200) according to claim 12, also comprising:
- A device (205) for receiving cutting residues.

14. The device (200) according to claim 12 or 13, also comprising:
- A measuring device (210) arranged downstream of the cutting device (208) for measuring the width of the cut flat strip of non-ferrous metal.

15. The device (200) according to one or more of claims 9 to 14, also comprising:
- A measuring device for determining a temperature profile transverse to the weld seam, wherein the measured temperature is fed to the welding device (216) for control of the energy output and/or the feed device (202) and/or to the feeding device (219) for control of the feeding speed.

16. The device (200) according to one or more of claims 9 to 15, also comprising:
- A measuring device (220) for measuring at least one dimension of the hollow profile (224) after the welding (110).

17. The device (200) according to one or more of claims 9 to 16, also comprising:
- A measuring device for checking the weld seam and/or material defects or inhomogeneities of the material.

## Revendications

1. Procédé (100) pour la fabrication en continu de profilés creux (224) fermés radialement en métaux non-ferreux avec une épaisseur de paroi inférieure à 0,15 mm et des sections transversales inférieures à 4 mm, comprenant :
- l'introduction (102) d'une bande plate (204) du métal non-ferreux avec une première vitesse d'introduction dans un dispositif de formage (212), dans lequel l'épaisseur de la bande correspond à l'épaisseur de paroi du profilé creux (224) à fabriquer,
- le formage en continu (108) de la bande plate (204) introduite en une forme correspondant au profilé creux (224), dans lequel deux arêtes opposées de la bande plate (204) s'appuient, dans une zone de contact s'étendant dans la direction longitudinale du profilé creux, de manière affleurante l'une contre l'autre,
- le soudage en continu (110) des arêtes s'appuyant, dans la zone de contact, de manière affleurante l'une contre l'autre, sans traitement préalable pour la réduction des réflexions, dans lequel les arêtes à souder sont guidées, avec la première vitesse d'introduction, afin qu'elles passent devant une zone de soudage immobile sur un dispositif (200) implémentant le procédé, et dans lequel une surface dans la zone de soudage est chauffée au moyen d'un laser (216), qui émet une lumière d'une longueur d'onde inférieure à 600 nm et dans lequel la surface chauffée présente un diamètre qui est inférieur à 20 % de la dimension de la section transversale du profilé creux,
- retrait (114) du profilé creux (224) hors de la zone de soudage et
- logement (122) du profilé creux (224) soudé dans un dispositif de logement (226),
**caractérisé en ce que** le rayon laser est focalisé sur la zone de soudage selon un profil qui comprend un point focal central de grande intensité et une zone annulaire entourant le point focal central d'intensité plus faible.

2. Procédé (100) selon la revendication 1, dans lequel au moins la zone de soudage est entourée ou recouverte à l'intérieur et/ou à l'extérieur lors du chauffage avec un gaz protecteur inerte.

3. Procédé (100) selon la revendication 1 ou 2, comprenant en outre :
- la découpe (106) d'une ou de deux arêtes de la bande plate du métal non-ferreux avant le formage.

4. Procédé (100) selon la revendication 3, comprenant en outre :
- la mesure de la largeur de la bande découpée du métal non-ferreux avant le soudage et/ou la mesure (116) d'au moins une dimension du profilé creux (224) après le soudage et
- la régulation de la largeur de coupe et/ou le contrôle d'un dispositif (212) pour le formage en fonction du résultat de mesure et d'une valeur prédéfinie.

5. Procédé (100) selon l'une des revendications précédentes, comprenant en outre :
- la mesure (112) du profil de température transversalement par rapport au cordon de soudure et contrôle de l'énergie apportée à la zone de soudage en fonction d'une comparaison du profil de température avec un profil prédéfini.

6. Procédé (100) selon l'une des revendications précédentes, comprenant en outre :
- la vérification (118) du cordon de soudure au moyen d'ultrasons, d'une mesure de courants de Foucault et/ou de rayons X.

7. Procédé (100) selon l'une des revendications précédentes, comprenant en outre :
- la détermination (104, 120) de la force de traction sur la bande plate du métal non-ferreux et/ou sur le profilé creux soudé et
- la régulation des entraînements qui introduisent la bande plate et/ou le profilé creux soudé dans le formage, la soudure et/ou le logement dans un dispositif de logement (226).

8. Procédé (100) selon l'une ou plusieurs des revendications précédentes, comprenant en outre :
- l'utilisation d'un processus de réduction respectivement d'étirage sur le profilé creux (224) soudé, dans lequel une ou plusieurs dimensions de section transversale et/ou l'épaisseur de paroi du profilé creux (224) sont réduites, dans lequel, dans le processus de réduction respectivement le processus d'étirage est un seul outil externe.

9. Dispositif (200) pour la fabrication en continu de profilés creux radialement fermés (224) en métaux non-ferreux avec une épaisseur de paroi inférieure à 0,15 mm et des sections transversales inférieures à 4 mm, comprenant :
- un dispositif d'introduction (202) conçu pour l'introduction d'une bande plate (204) du métal non-ferreux,
- un dispositif de formage (212), qui forme la bande plate (204) en métal non-ferreux afin d'obtenir le profilé creux (224), de sorte que les arêtes opposées de la bande plate en métal non-ferreux sont disposées bout-à-bout,
- deux moyens de guidage (214, 218) distants entre eux, entre lesquels les arêtes sont maintenues appuyées entre elles de manière affleurante,
- un dispositif de soudage (216), qui soude entre elles les arêtes s'appuyant entre elles de manière affleurante entre les moyens de guidage (214, 218), dans lequel le dispositif de soudage (216) comprend un laser, ce laser étant conçu pour chauffer, dans la zone de soudage, une surface avec un diamètre inférieur à 20 % de la dimension de section transversale du profilé creux et ce laser émettant une lumière d'une longueur d'onde inférieure à 600 nm avec une énergie qui provoque une fusion locale du métal non-ferreux des deux côtés des arêtes disposées bout-à-bout,
- un dispositif d'avance (219) qui transporte le profilé creux (224) soudé plus loin et
- un dispositif de logement (226), qui loge le profilé creux (224), **caractérisé en ce que** le dispositif de soudage (216) est conçu pour focaliser le rayon laser selon un profil sur la zone de soudage, dans lequel le profil comprend un point focal central de grande intensité et une zone annulaire entourant le point focal central d'intensité plus faible.

10. Dispositif (200) selon la revendication 9, comprenant en outre :
- un dispositif de mesure (206) disposé avant le dispositif de formage (212), pour la détermination de la force de traction agissant sur la bande (204) introduite, dans lequel la force de traction déterminée est appliquée pour le contrôle des entraînements du dispositif (200).

11. Dispositif (200) selon la revendication 9 ou 10, comprenant en outre :
- un dispositif de mesure et/ou de régulation (220), disposé derrière le dispositif de soudage (216), qui mesure la force de traction agissant sur le profilé creux (224) soudé, dans lequel la force de traction mesurée est appliquée à un entraînement du dispositif d'avance (219) pour la régulation.

12. Dispositif (200) selon la revendication 10, 11 ou 12, comprenant en outre :
- un dispositif de coupe (208), disposé avant le dispositif de formage (212), au moyen duquel une ou les deux arêtes de la bande plate (204) introduite en métal non-ferreux sont coupées, dans lequel la largeur de la bande coupée correspond à la périphérie du profilé creux (224) le long des fibres neutres.

13. Dispositif (200) selon la revendication 12, comprenant en outre :
- un dispositif (205) pour le logement des résidus de bande.

14. Dispositif (200) selon la revendication 12 ou 13, comprenant en outre :
- un dispositif de mesure (210), disposé derrière le dispositif de coupe (208) pour la mesure de la largeur de la bande plate découpée en métal non-ferreux.

15. Dispositif (200) selon l'une ou plusieurs des revendications 9 à 14, comprenant en outre :
- un dispositif de mesure pour la détermination d'un profil de température transversalement par rapport au cordon de soudure, dans lequel le profil de température mesuré est entré dans le dispositif de soudage (216) pour le contrôle de l'énergie générée et/ou dans le dispositif d'introduction (202) et/ou le dispositif d'avance (219) pour le contrôle de la vitesse d'introduction.

16. Dispositif (200) selon l'une ou plusieurs des revendications 9 à 15, comprenant en outre :
- un dispositif de mesure (220) pour la mesure d'au moins une dimension du profilé creux (224) après le soudage (110).

17. Dispositif (200) selon l'une ou plusieurs des revendications 9 à 16, comprenant en outre :
- un dispositif de mesure pour la vérification du cordon de soudure et/ou des défauts du matériau respectivement des inhomogénéités du matériau.
